# EUROPÄISCHE PATENTSCHRIFT

(11) **EP 2 664 500 B1**
(45) Veröffentlichungstag und Bekanntmachung des Hinweises auf die Patenterteilung: **12.08.2015**
(21) Anmeldenummer: 13166023.5
(22) Anmeldetag: 30.04.2013
(51) Int. Cl.: B60R 22/46

(54) **Gurtstrafferantrieb**
Belt pretensioning device
Entraînement de prétensionneur de ceinture

(30) Priorität: 18.05.2012 DE 102012208347
(43) Veröffentlichungstag der Anmeldung: 20.11.2013
(73) Patentinhaber: IMS Gear GmbH, 78166 Donaueschingen (DE)
(72) Erfinder: Lucht, Andreas, 25358 Horst (DE); Koop, Matthias, 78166 Donaueschingen (DE)
(74) Vertreter: Westphal, Mussgnug & Partner Patentanwälte mbB

(56) Entgegenhaltungen:
- DE-A1-102007 033 230
- DE-A1-102008 001 549
- DE-A1-102008 048 339
- US-A- 4 664 334
- US-A1- 2005 269 478

## Beschreibung

Die Erfindung betrifft einen Gurtstrafferantrieb zum Straffen eines um eine Wickelwelle aufwickelbaren Sicherheitsgurtes gemäß dem Oberbegriff des Patentanspruchs 1.

Ein solcher reversibler Gurtstrafferantrieb ist bspw. aus der DE 10 2008 048 339 A1 bekannt, bei welchem ein Elektromotor über ein erstes, als Schraubradgetriebe ausgebildetes Getriebe eine Spindelwelle antreibt, die über ein zweites Getriebe ihrerseits ein Abtriebsrad antreibt, das zum Aufwickeln eines Sicherheitsgurtes auf einer Wickelwelle drehfest angeordnet ist. Dieses zweite Getriebe wird von einer auf der Spindelwelle angeordneten Schnecke und einer Außenschrägverzahnung des Abtriebsrades gebildet.

Ein reversibler Gurtstraffer wird bei Bedarf, also bspw. bei einem leichten Crash oder bei einem drohenden Crash, bei Geländefahrten oder bei Auftreten von starken Bremsverzögerungen des Fahrzeugs aktiviert, wodurch eine Straffung des Sicherheitsgurtes bewirkt wird. Zum Aufrechterhalten der Gurtstraffung in solchen Situationen wird der Elektromotor mit einer hohen Stromstärke bestromt, wodurch das Bordnetz des Fahrzeugs unerwünscht hoch belastet wird.

Die Auslösung des Gurtstraffers im Crashfall erfolgt pyrotechnisch und stellt eine Volllaststraffung dar, die zu einem Entkuppeln des Gurtstraffers vom Elektromotor führt. Das anschließende Halten des Sicherheitsgurtes mittels des elektrischen Antriebes durch Restbestromung des Elektromotors führt dazu, dass dieser wieder auf den Gurtstraffer aufgekuppelt wird und dabei Störungen in der Kraftbegrenzung auftreten können. Zudem belastet diese Restbestromung des Elektromotors das Bordnetz des Fahrzeugs.

Außerdem treten bei einer Volllaststraffung hochdynamische Lastzustände auf. Diese führen zu hohen Drehmomenten (Haltemomenten) in der Abtriebsstufe des Gurtstraffers und somit zu hohen Verzahnungskräften, insbesondere bei einer Schrägverzahnung der verwendeten Verzahnungsbauteile auch zu hohen Axialkräften, die eine Verformung der Verzahnungsbauteile, wie Radkörper und der Lagerstellen im Gehäuse des Gurtstraffers bewirken. Dies bedeutet ein Verlust an Eingriffstiefe und führt zu axialen Relativverschiebungen im Eingriff der Verzahnungsbauteile, in deren Folge die aktive Verzahnungsbreite stark reduziert wird. Beide negativen Effekte bewirken eine deutliche Reduzierung der Tragfähigkeit der Verzahnungsbauteile.

Einen anderen Gurtstrafferantrieb offenbart die US 4,664,334 A.

Die Aufgabe der Erfindung ist es, einen Gurtstrafferantrieb der eingangs genannten Art bereitzustellen, der die oben genannten Nachteile vermeidet.

Diese Aufgabe wird gelöst durch einen Gurtstrafferantrieb mit den Merkmalen des Patentanspruchs 1.

Gemäß dem Patentanspruch 1 zeichnet sich ein solcher Gurtstraffer zum Straffen eines um eine Wickelwelle aufwickelbaren Sicherheitsgurtes dadurch aus, dass die Außenverzahnung des Abtriebsrades wenigstens zwei Verzahnungsabschnitte aufweist, wobei ein erster Verzahnungsabschnitt eine zylindrische Verzahnung mit konstanter Geometrie aufweist und ein sich daran anschließender zweiter Verzahnungsabschnitt mit zunehmendem Fußkreisdurchmesser und/oder zunehmendem Kopfkreisdurchmesser und/oder zunehmender Zahndicke ausgebildet ist.

Hierdurch wird erreicht, dass in treibender Richtung (Vorwärtsrichtung) des Schneckengetriebes der erste Verzahnungsabschnitt mit der Schnecke kämmt und in einer vom Abtriebsrad getriebenen Rückwärtsrichtung des zweiten Getriebes die dabei erzeugten Axialkräfte durch Verformungen dafür sorgen, dass der zweite Verzahnungsabschnitt in Wirkverbindung mit der Schnecke kommt.

Bei der erfindungsgemäßen Lösung wird also der zweite Verzahnungsabschnitt am Abtriebsrad so angebracht, dass im Falle hoher passiver Lasten, die also bspw. in einem Crashfall an dem Abtriebsrad auftreten und größer als die aktive Straffkraft des Gurtstrafferantriebes sind, dieser zweite Verzahnungsabschnitt zur Schnecke gedrückt wird, so dass dadurch eine klemmende Wirkverbindung zwischen dem Abtriebsrad und der Schnecke erzeugt wird. Dadurch steigt die Kraftübertragungs- und Überdeckungsfläche zwischen den beiden Verzahnungen des Abtriebsrades und der Schnecke an, wodurch die im Abtriebsrad auftretenden Axial- und Radialkräfte über die als Lastabstützung wirkende Schnecke abgefangen werden und somit die Belastung der Lagerstellen der Abtriebsstufe sinkt. Hierdurch wird die Tragfähigkeit der Verzahnung des Abtriebsrades und der Schnecke erhöht.

Weiterhin führt die Wirkverbindung der Schnecke mit dem zweiten Verzahnungsabschnitt zu einer Erhöhung der Reibung zwischen dem Abtriebsrad und der Schnecke, so dass sich der dadurch reduzierende Wirkungsgrad bei einer vom Abtriebsrad getriebenen Rückwärtsrichtung des Schneckengetriebes daher auch eine von dem Elektromotor aufzubringende reduzierte Haltekraft erfordert, also eine Bestromung des Elektromotors mit einer geringeren Stromstärke ausreichend ist. Damit kann die elektrische Haltefunktion zum Halten des Sicherheitsgurtes bei hoher Last mit einem geringen Haltestrom des Elektromotors realisiert werden. Somit steigt durch die sich verändernde Zahngeometrie, ausgehend von dem ersten Verzahnungsabschnitt zum zweiten Verzahnungsabschnitt die passive Lastaufnahme an.

Diese einfache und überraschende erfindungsgemäße Lösung nutzt die Erkenntnis, dass ein mechanisches System, welches insbesondere Kunststoffe verwendet, wie ein Gurtstrafferantrieb, zwangsläufig Verformungen unter Last aufweist, welche funktional entsprechend der Erfindung genutzt werden. Die Außenschrägverzahnung des zweiten Getriebes führt zu axialen Kräften, die in Abhängigkeit der Steigungsrichtung der Außenverzahnung gerichtet sind und das Abtriebsrad in die von der Verformung des Systems ermöglichte Position gedrückt wird, so dass in dieser Position der zweite Verzahnungsabschnitt in eine kämmende Wirkverbindung mit der Verzahnung der Schnecke kommt, wobei aufgrund des zunehmenden Fußkreisdurchmessers und/oder des zunehmenden Kopfkreisdurchmessers und/oder der zunehmenden Zahndicke des zweiten Verzahnungsabschnittes die axialen Kräfte zwischen dem Abtriebsrad und der Schnecke zu deren Verklemmung führen.

Ein Abtriebsrad des erfindungsgemäßen Gurtstrafferantriebes mit einer zwei Verzahnungsabschnitte aufweisenden Außenschrägverzahnung ist einfach herstellbar, bspw. als gespritztes Kunststoffteil. Damit können die Herstellkosten des erfindungsgemäßen Gurtstrafferantriebes gering gehalten werden, da lediglich dieses Abtriebsrad gemäß der Erfindung auszubilden ist.

Nach einer Ausgestaltung der Erfindung weist der zweite Verzahnungsabschnitt im Anschluss an den ersten Verzahnungsabschnitt einen Verlauf des Fußkreisdurchmessers auf, der sich ausgehend von dem Fußkreisdurchmesser des ersten Verzahnungsabschnittes hin zu einer Stirnfläche des Abtriebsrades bis im Wesentlichen auf einen Wert des Kopfkreisdurchmessers des ersten Verzahnungsabschnittes erhöht.

Damit wird zum einen ein kontinuierlicher Übergang von dem ersten Verzahnungsabschnitt in den zweiten Verzahnungsabschnitt erreicht und andererseits werden die erzeugten Verklemmungskräfte zwischen dem Abtriebsrad und der Schnecke bei in Rückwärtsrichtung betriebenen zweiten Getriebe optimal an die in der Abtriebsstufe auftretenden Belastungen angepasst.

Eine besonders vorteilhafte Weiterbildung der Erfindung ist dadurch gegeben, dass der zweite Verzahnungsabschnitt globoidisch ausgebildet ist. Damit steigt die Zahntiefe im Bereich dieses zweiten Verzahnungsabschnittes kreisbogenförmig an und führt zu einer Zunahme der Verklemmungskräfte bei zunehmend auftretenden Axialkräften am Abtriebsrad.

Alternativ kann die globoide Verzahnung des zweiten Verzahnungsabschnittes mit einem von dem Fußkreisdurchmesser und dem Kopfkreisdurchmesser des ersten Verzahnungsabschnittes ausgehenden bis auf einen vorgegebenen Wert ansteigenden Fußkreisdurchmesser und Kopfkreisdurchmesser ausgebildet werden.

In einer weiteren Ausgestaltung der Erfindung ist die Spindelwelle auf einem federelastischen Auflager mit definierter Federsteifigkeit gelagert, derart, dass bei einem Betrieb des Schneckengetriebes in Vorwärtsrichtung die Schnecke in Wirkverbindung mit dem ersten Verzahnungsabschnitt des Abtriebsrades steht und bei einem Betrieb des Schneckengetriebes in Rückwärtsrichtung unter einer passiven Haltelast die Schnecke in Wirkverbindung mit dem zweiten Verzahnungsabschnitt des Abtriebsrades kommt.

Die von dem federelastischen Auflager aufgebrachten Federkräfte wirken den axialen Verzahnungskräften entgegen. Dies führt zu einer Erhöhung der Reibung und somit zu einer Wirkungsgradreduktion der Abtriebsstufe, wodurch der nötige Haltestrom am Elektromotor reduziert werden kann.

Diese federelastische Lagerung der Spindelwelle führt somit dazu, dass bei einer Gurtstraffer-Anwendung, also bei einer von dem Elektromotor erzeugten Straffkraft und damit bewirkten Straffung des Sicherheitsgurtes, bei der das Schneckengetriebe in Vorwärtsrichtung, als treibend betrieben wird, ein hoher Wirkungsgrad erzielt wird, während aber bei in Rückwärtsrichtung betriebenen Schneckengetriebe bei einem passiven Haltemoment, welches höher ist als dasjenige Moment, bei welchem noch eine Straffung des Sicherheitsgurtes durchgeführt wird, ein möglichst geringer Wirkungsgrad vorliegt, so dass von dem Elektromotor nur noch ein kleines Haltemoment zum Halten des Sicherheitsgurtes zu erzeugen ist, also hierzu nur ein kleiner Haltestrom erforderlich ist und dadurch das Bordnetz des Fahrzeugs nur gering belastet wird.

Damit kann die Stromstärke zur Erzeugung des Haltemomentes so weit gesenkt werden, dass auch ein Halten des Sicherheitsgurtes in gestrafftem Zustand mit einem hohen Haltemoment über eine längere Zeitdauer möglich ist, ohne das Bordnetz des Fahrzeug zu stark zu belasten.

Vorzugsweise ist gemäß einer Weiterbildung der Erfindung das Auflager auf einem federelastischen Bauelement, vorzugsweise einem Federelement gelagert, wodurch eine einfache Realisierung ermöglicht wird.

Schließlich ist gemäß einer letzten Ausgestaltung der Erfindung ein Getriebe vorgesehen, über welches die Spindelwelle von dem Elektromotor angetrieben wird. Damit sind zwei Getriebe hintereinander geschaltet, so dass dadurch ein niedriger getriebener Wirkungsgrad sich einstellt.

Die Erfindung wird nachfolgend anhand von Ausführungsbeispielen unter Bezugnahme auf die beigefügten Figuren ausführlich beschrieben. Es zeigen:
- Figur 1: eine schematische perspektivische Darstellung eines Gurtstrafferantriebes mit einem von einem Elektromotor angetriebenen Schneckengetriebe als Ausführungsbeispiel der Erfindung,
- Figur 2: eine schematische perspektivische Darstellung eines Gurtstrafferantriebes mit einem Schneckengetriebe, welches über ein von einem Elektromotor angetriebenen Getriebe angetrieben wird als weiteres Ausführungsbeispiel der Erfindung,
- Figur 3: eine Schnittdarstellung des Abtriebsrades und der Schnecke im Normalschnitt gemäß Schnitt I-I nach Figur 1 und Figur 2,
- Figur 3a: eine vergrößerte Draufsicht und eine vergrößerte Schnittdarstellung der Verzahnung des in dem Gurtstrafferantrieb gemäß den Figuren 1 und 2 eingesetzten Abtriebsrades mit einem globoidischen zweiten Verzahnungsabschnitt,
- Figur 3b: eine vergrößerte Draufsicht und eine vergrößerte Schnittdarstellung der Verzahnung des in dem Gurtstrafferantrieb gemäß den Figuren 1 und 2 eingesetzten Abtriebsrades mit zunehmendem Kopfkreisdurchmesser des zweiten Verzahnungsabschnittes,
- Figur 3c: eine vergrößerte Draufsicht und eine vergrößerte Schnittdarstellung der Verzahnung des in dem Gurtstrafferantrieb gemäß den Figuren 1 und 2 eingesetzten Abtriebsrades mit vergrößertem Fußkreisdurchmesser des zweiten Verzahnungsabschnittes,
- Figur 3d: eine vergrößerte Draufsicht und eine vergrößerte Schnittdarstellung der Verzahnung des in dem Gurtstrafferantrieb gemäß den Figuren 1 und 2 eingesetzten Abtriebsrades mit zunehmender Zahndicke des zweiten Verzahnungsabschnittes,
- Figur 3e: eine vergrößerte Draufsicht und eine vergrößerte Schnittdarstellung der Verzahnung des in dem Gurtstrafferantrieb gemäß den Figuren 1 und 2 eingesetzten Abtriebsrades mit einer globoiden Verzahnung ohne abnehmende Zahnhöhe des zweiten Verzahnungsabschnittes, und
- Figur 4: eine schematische Darstellung des Gurtstrafferantriebes nach Figur 1 mit einer federelastisch gelagerten Spindel.

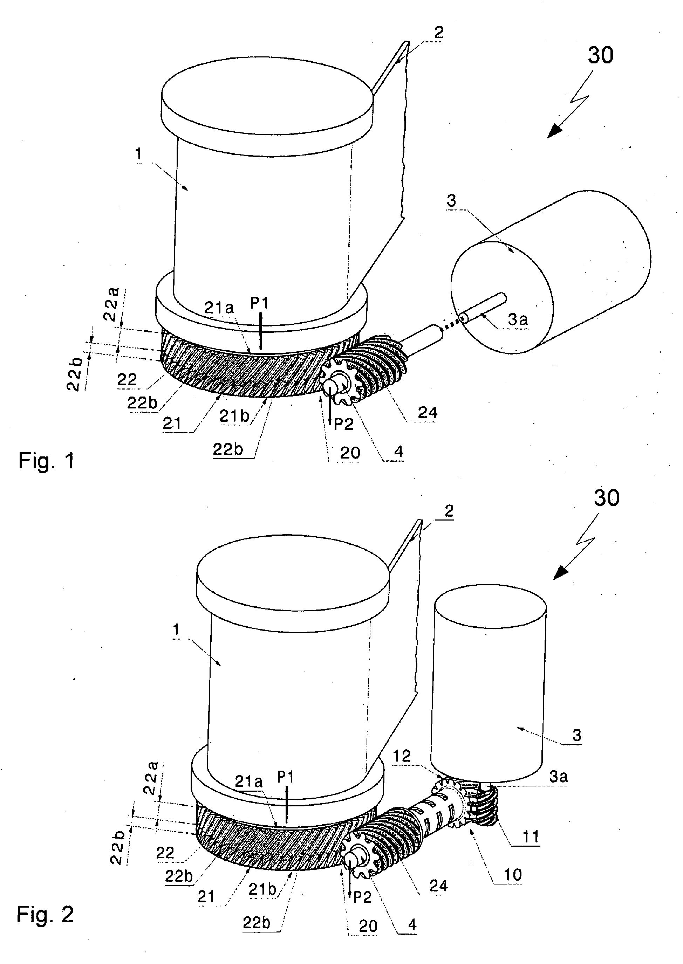

Der Gurtstrafferantrieb 30 gemäß den Figuren 1, 2 und 4 ist jeweils nur mit seinen für das Verständnis der Erfindung wesentlichsten Teilen dargestellt.

Der Gurtstrafferantrieb 30 nach Figur 1 umfasst einen Elektromotor 3, dessen Motorwelle 3a zum Antrieb eines Schneckengetriebes 20 direkt mit einer Spindelwelle 4 gekoppelt ist, um eine Wickelwelle 1 zum Straffen, also zum Aufwickeln eines Sicherheitsgurtes 2 anzutreiben.

Demgegenüber wird gemäß des Gurtstrafferantriebes 30 nach Figur 2 das Schneckengetriebe 20 von dem Elektromotor 3 über ein Getriebe 20 angetrieben. Das Getriebe 10 ist als Schneckengetriebe mit einer auf der Motorwelle 3a des Elektromotors 3 drehfest angeordneten Schnecke 11 und einem zugehörigen, auf der Spindelwelle 4 fest montierten Schneckenrad 12 ausgebildet.

Ein Gehäuse des Gurtstrafferantriebes 30 ist in den Figuren 1 und 2 nicht dargestellt.

Das Schneckengetriebe 20 umfasst eine auf der Spindelwelle 4 drehfest angeordnete Schnecke 24 sowie ein mit dieser kämmendes Abtriebsrad 21, welches eine Außenschrägverzahnung 22 aufweist. Dieses Abtriebsrad 21 ist mit der Wickelwelle 1 über eine Kupplung verbunden.

Gemäß Figuren 1, 2 und 3 besteht die schrägverzahnte Außenverzahnung 22 aus zwei Verzahnungsabschnitten, einem ersten Verzahnungsabschnitt 22a und einem zweiten Verzahnungsabschnitt 22b mit verschiedenen Verzahnungsarten.

Der erste Verzahnungsabschnitt 22a, beginnend an einer Stirnfläche 21a des Abtriebsrades 21 weist eine zylindrische Verzahnung mit konstanter Verzahnungsgeometrie auf. Eine solche konstante Verzahnungsgeometrie zeichnet sich durch eine konstante Zahntiefe T₁, die einem konstanten Fußkreisdurchmesser d_{F} entspricht und einen konstanten Kopfkreisdurchmesser d_{K} (vgl. Figur 2) aus.

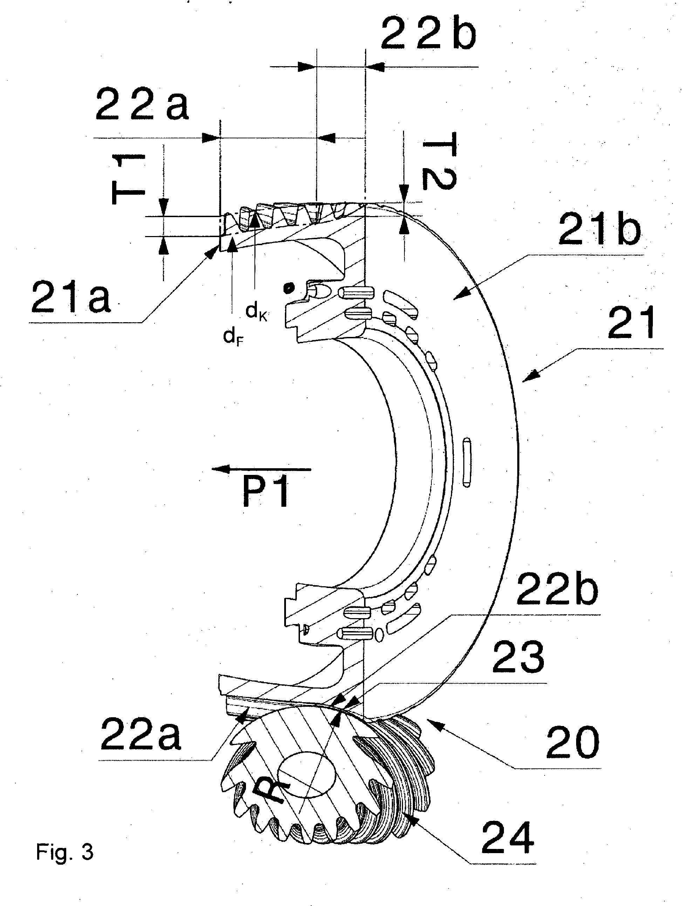

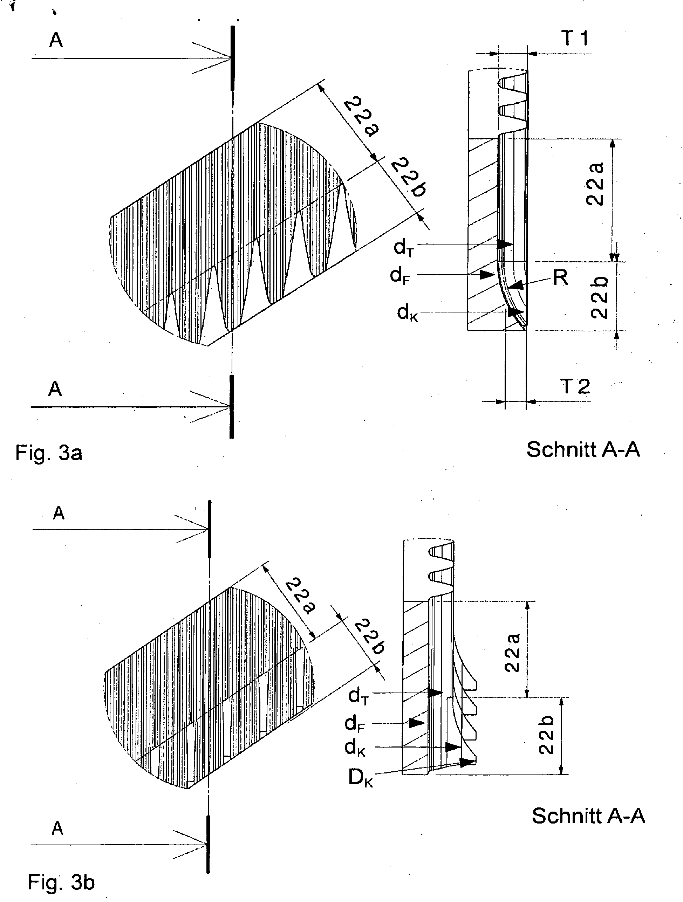

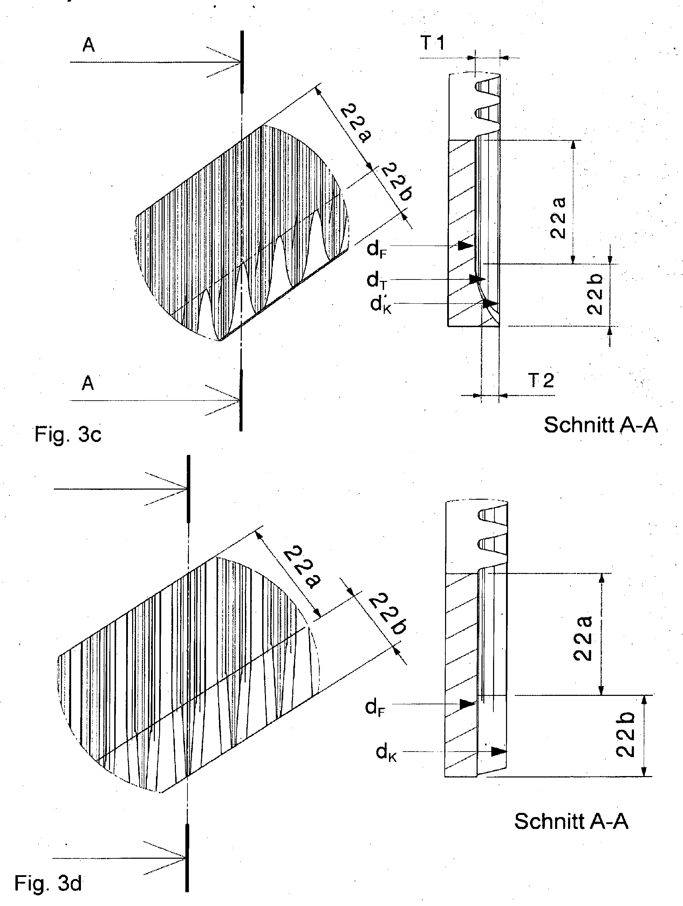

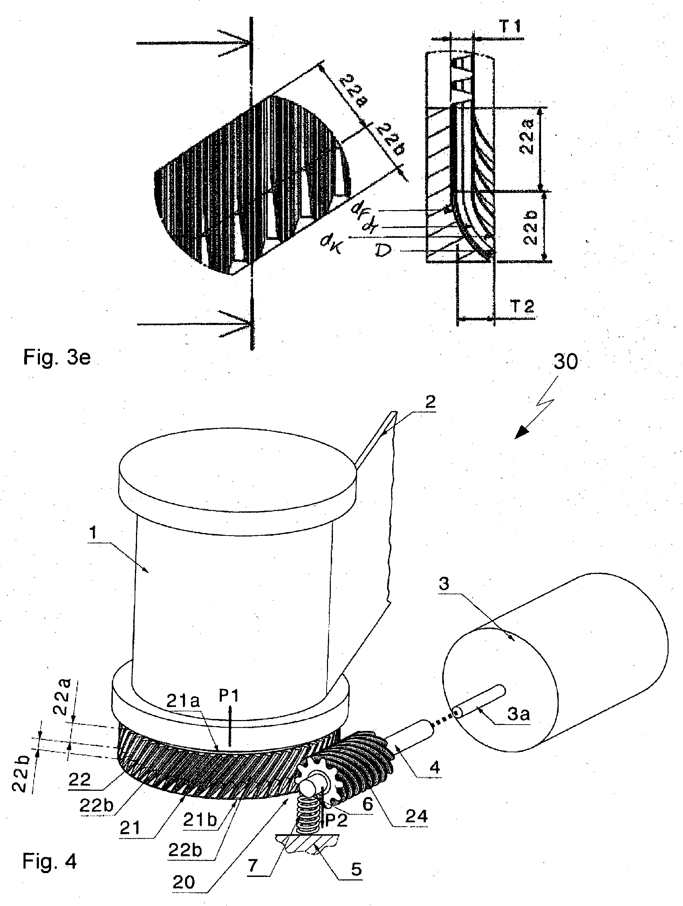

An diesen ersten Verzahnungsabschnitt 22a schließt sich der zweite Verzahnungsabschnitt 22b mit kontinuierlich abnehmender Zahntiefe T₂ bzw. kontinuierlich zunehmendem Fußkreisdurchmesser d_{F} an, wobei sich der Kopfkreisdurchmesser d_{K} gegenüber demjenigen des ersten Verzahnungsabschnittes 22a nicht verändert, und erstreckt sich bis zur gegenüberliegenden Stirnfläche 21b. Dieser zweite Verzahnungsabschnitt 22b ist gemäß Figur 3a als globoide Verzahnung ausgebildet und in dem unteren Teil der Schnittdarstellung nach Figur 3 deutlich zu erkennen, der den Eingriff der Verzahnung der Schnecke 24 mit der globoiden Verzahnung des zweiten Verzahnungsabschnittes 22b zeigt.

Der Schnitt A-A nach Figur 3a erstreckt sich im Bereich zwischen zwei Zähnen des zweiten Verzahnungsabschnittes 22b und zeigt dessen kreisbogenförmigen Verlauf des Fußkreisdurchmessers d_{F}, der auch mit dem Bezugszeichen 23 bezeichnet ist, wobei der zugehörige Radius R wesentlich größer als die Zahntiefe T₁ der zylindrischen Verzahnung 22a ist. Bei der globoiden Verzahnung verläuft nicht nur der Fußkreisdurchmesser d_{F} kreisbogenförmig, sondern auch der Grundkreisdurchmesser bzw. der Teilkreisdurchmesser d_{T}.

Der Übergang von der zylindrischen Verzahnung des ersten Verzahnungsabschnittes 22a zur globoiden Verzahnung des zweiten Verzahnungsabschnittes 22b ist kontinuierlich, d. h. die globoide Verzahnung 22b beginnt mit einer der Zahntiefe T₁ entsprechenden Zahntiefe T₂ und nimmt bis zur Stirnfläche 21b des Abtriebsrades 21 im Wesentlichen auf den Wert Null ab, wobei der Zahnkopfradius d_{K} über die gesamte Breite der Verzahnung des Abtriebsrades 21 konstant bleibt.

Die Aufteilung der Verzahnung 22 des Abtriebsrades 21 in die beiden Verzahnungsabschnitte 22a und 22b kann derart erfolgen, dass die globoide Verzahnung 22b im Wesentlichen ein Drittel der Stirnbreite des Abtriebsrades 21 beträgt.

Die Funktion des Gurtstrafferantriebes 30 wird im Folgenden erläutert.

Zur Erzeugung einer Straffkraft zur Straffung des Sicherheitsgurtes 2 wird die Anordnung mit dem Schneckengetriebe 10 (vgl. Fig.1) bzw. die Anordnung mit dem Schneckengetriebe 10 und dem Getriebe 20 (vgl. Fig. 2) in Vorwärtsrichtung betrieben, so dass die Schnecke 24 des Schneckengetriebes 20 mit der zylindrischen Verzahnung des ersten Verzahnungsabschnittes 22a des Abtriebsrades 21 kämmt, so dass dadurch ein hoher treibender Wirkungsgrad gesichert wird. Dies stellt die Nominallage des Schneckengetriebes 20 dar.

Nach einer Straffung des Sicherheitsgurtes 2 durch den Elektromotor 3 wird ein hoher Druck auf den Sicherheitsgurt 2 ausgeübt, um den Fahrzeuginsassen in einer bestimmten Position zu halten. Dieser auf das Abtriebsrad 21 übertragene Druck versucht das Schneckengetriebe 20 (und natürlich auch das Getriebe 10 im Falle des Gurtstrafferantriebes 30 nach Figur 2) in Rückwärtsrichtung zu drehen.

Aufgrund der Schrägverzahnungen des Schneckengetriebes 20 entstehen an dem Abtriebsrad 21 axiale Kräfte, deren Richtung von der Steigungsrichtung der Schrägverzahnungen abhängt. Gemäß den Figuren 1, 2 und 3 ist diese Steigungsrichtung so gewählt, dass die entstehenden Axialkräfte das Abtriebsrad 21 in die mit einem Pfeil P1 bezeichnete Richtung drücken kann, so dass nicht mehr die zylindrische Verzahnung 22a mit der Schnecke 24 kämmt, sondern die globoide Verzahnung des zweiten Verzahnungsabschnittes 22b in eine klemmende Verzahnung mit der Schnecke 24 kommt, wodurch eine wesentliche Reduzierung des Wirkungsgrades sowohl des in Rückwärtsrichtung betriebenen als auch in Vorwärtsrichtung betriebenen zweiten Getriebes 20 bewirkt wird. Durch diese Veränderung des Schneckengetriebes 20 aus seiner Nominallage in eine Eingriffslage mit der globoiden Verzahnung nimmt der Wirkungsgrad kontinuierlich ab.

Dadurch steigt die Kraftübertragungs- und Überdeckungsfläche zwischen der globoiden Verzahnung 22b des Abtriebsrades 21 und der Verzahnung der Schnecke 24 an, wodurch die am Abtriebsrad 21 auftretenden Axial- und Radialkräfte über die als Lastabstützung wirkende Schnecke 24 abgefangen werden. Durch die geänderte Zahngeometrie der globoiden Verzahnung 22b steigt die passive Lastaufnahme des Gurtstrafferantriebes 30 an.

Der sich dadurch reduzierende Wirkungsgrad bei einer vom Abtriebsrad 21 getriebenen Rückwärtsrichtung des zweiten Getriebes 20 erfordert daher auch eine von dem Elektromotor 3 aufzubringende reduzierte Haltekraft, also eine Bestromung mit einer geringeren Stromstärke. Damit kann die elektrische Haltefunktion zum Halten des Sicherheitsgurtes bei hoher Last mit einem geringen Haltestrom des Elektromotors 3 realisiert werden.

In den Ausführungsbeispielen gemäß den Figuren 1, 2, 3 und 3a wird zur Abstützung hoher passiver Haltekräfte das Verklemmen zwischen dem Abtriebsrad 21 und der Verzahnung der Schnecke 24 mittels einer globoidischen Verzahnung des zweiten Verzahnungsabschnittes 22b erreicht. Ein solches Verklemmen kann auch mit anderen Verzahnungsgeometrien des zweiten Verzahnungsabschnittes 22b und Abwandlungen der globoiden Verzahnung erreicht werden, wie dies nachfolgend anhand der Figuren 3b bis 3e erläutert wird.

So zeigt die Figur 3b eine Verzahnung des zweiten Verzahnungsabschnittes 22b, bei dem die Zahnkopfhöhe und/oder die Zahnfußhöhe kontinuierlich bis auf einen vorgegebenen Wert D_{K} ansteigt, d. h. gemäß dieser Figur 3b steigt der Kopfkreisradius ausgehend von demjenigen des ersten Verzahnungsabschnittes 22a kreisbogenförmig auf diesen vorgegebenen Wert D_{K} an.

Die Figur 3c zeigt eine Abwandlung einer globoiden Verzahnung, bei der sowohl der Kopfkreisdurchmesser als auch der Grundkreisdurchmesser bzw. Teilkreisdurchmesser mit den Werten des ersten Verzahnungsabschnittes 22a in den zweiten Verzahnungsabschnitt 22b weitergeführt wird, jedoch lediglich der Fußkreisdurchmesser d_{F} kreisbogenförmig bis zu einem dem Kopfkreisdurchmesser entsprechenden Wert ansteigt, wobei dies einer kontinuierlichen Abnahme der Zahntiefe T₂, ausgehend von der Zahntiefe T₁ des ersten Verzahnungsabschnittes 22a bis auf einen Wert Null entspricht.

Eine weitere Möglichkeit zum Bewerkstelligen der Selbsthemmung des Abtriebsrades 21 in einer Wirkverbindung mit der Schnecke 24 ist mit einer Verzahnungsgeometrie des zweiten Verzahnungsabschnittes nach Figur 3d realisierbar. Hiernach verbreitert sich die Zahndicke s des ersten Verzahnungsabschnittes 22a über den zweiten Verzahnungsabschnitt 22b bis auf einen Wert S.

Schließlich zeigt Figur 3e eine globoide Verzahnungsgeometrie des zweiten Verzahnungsabschnittes 22b, bei dem ausgehend von dem Fußkreisdurchmesser d_{F}, dem Grundkreis- bzw. Teilkreisdurchmesser d_{T} und dem Kopfkreisdurchmesser d_{K} globoidförmig über den zweiten Verzahnungsabschnitt 22b weitergeführt wird, so dass die genannten Größen d_{F}, d_{T} und d_{K} bei einem bestimmten gemeinsamen Wert D enden. Im Vergleich zu der globoidischen Verzahnung nach Figur 3 und 3a ist diese Verzahnung ohne eine abnehmende Zahnhöhe ausgebildet.

Die oben erläuterten Verzahnungsgeometrien für den zweiten Verzahnungsabschnitt 22b können jeweils für sich allein oder in Kombinationen oder Mischformen angewendet werden. Im Prinzip reicht es aus, wenn der zweite Verzahnungsabschnitt 22b entweder mit zunehmendem Fußkreisdurchmesser oder mit einem zunehmenden Kopfkreisdurchmesser oder mit einer zunehmenden Zahndicke ausgebildet ist, wobei es sich als vorteilhaft herausgestellt hat, wenn zwei dieser Größen für die Verzahnungsgeometrie des zweiten Verzahnungsabschnittes 22b kombiniert werden.

Ein weiteres Ausführungsbeispiel des erfindungsgemäßen Gurtstrafferantriebes 30 zeigt Figur 4, welches den gleichen Aufbau wie der Gurtstrafferantrieb 30 nach Figur 1 aufweist, bei dem jedoch zusätzlich die Spindelwelle 4 federelastisch gelagert ist. Dies wird durch ein Auflager 6 realisiert, welches sich gegen ein Gehäuseteil 5 eines Gehäuses über ein Federelement 7 abstützt.

Die Federsteifigkeit des Federelementes 7 ist definiert eingestellt, so dass bei einer bestimmten an dem Abtriebsrad 21 wirkenden, über der aktiv erzeugten Strafflast liegenden passiven Last, also bei einem Moment, welches größer ist als das für eine elektrische Straffung erforderliche Moment, die Spindelachse 4 aufgrund der unter einem solchen Moment entstehenden Verzahnungskräfte des Schneckengetriebes 20 in eine Richtung P2, also achsparallel zur Wickelwelle 1 gedrückt wird, so dass dadurch die Verzahnung der Schnecke 24 mit der globoiden Verzahnung des zweiten Verzahnungsabschnittes 22b gedrückt wird, wodurch eine klemmende Verzahnung entsteht, mit der Folge, dass der getriebene Wirkungsgrad in Abhängigkeit der erzeugten Verklemmungskraft sinkt.

Somit wird im Vorwärtsbetrieb, bei welchem die Verzahnung der Schnecke 24 mit der zylindrischen Verzahnung des ersten Verzahnungsabschnittes 22a des Abtriebsrades 21 kämmt, zum Straffen des Sicherheitsgurtes eine bestimmte Straffkraft, welche von dem Schrägungswinkel der Schrägverzahnungen abhängt, mit einem hohen Wirkungsgrad erzeugt. Bei einer höheren passiven Haltekraft, welche über die Federsteifigkeit des Federelementes 7 eingestellt wird, stellt sich ein niedriger getriebener Wirkungsgrad ein, so dass ein Teil der passiven Haltekraft durch die Schnecke 24 abgestützt wird und nur noch ein geringer Teil dieser Haltekraft durch den Elektromotor mit einer geringen Stromstärke aufgebracht werden muss.

Das Lösen der Verklemmung zwischen der Schnecke 24 und dem zweiten Verzahnungsabschnitt 22b kann nur durch eine Bestromung des Elektromotors 3 in Gegenrichtung erfolgen, wodurch sich die Schnecke 24 wieder in den ersten Verzahnungsabschnitt 22a mit der zylindrischen Verzahnung 22a quasi "zurückrollt" und sich dabei die Spindelwelle 4 in ihre ursprüngliche Position zurückbewegt.

## Patentansprüche

1. Gurtstrafferantrieb zum Straffen eines um eine Wickelwelle (1) aufwickelbaren Sicherheitsgurtes (2), umfassend
- einen Elektromotor (3), eine Spindelwelle (4) und ein mit der Wickelwelle (1) gekoppeltes Abtriebsrad (21), , und
- ein Schneckengetriebe (20), über welches das Abtriebsrad (21) von der Spindelwelle (4) angetrieben wird, wobei zur Bildung des Schneckengetriebes (20) eine schrägverzahnte Außenverzahnung (22) des Abtriebsrades (21) mit einer drehfest auf der Spindelwelle (4) gelagerten Schnecke (24) kämmt,
**dadurch gekennzeichnet, dass** die Außenverzahnung des Abtriebsrades wenigstens zwei Verzahnungsabschnitte (22a, 22b) aufweist, wobei ein erster Verzahnungsabschnitt (22a) eine Verzahnung mit konstanter Geometrie aufweist und ein sich daran anschließender zweiter Verzahnungsabschnitt (22b) mit zunehmendem Fußkreisdurchmesser (d_{F}) und/oder zunehmendem Kopfkreisdurchmesser (d_{K}) und/oder zunehmender Zahndicke (s) ausgebildet ist.

2. Gurtstrafferantrieb nach Anspruch 1,
**dadurch gekennzeichnet, dass** der zweite Verzahnungsabschnitt (22b) im Anschluss an den ersten Verzahnungsabschnitt (22a) einen Verlauf des Fußkreisdurchmessers (d_{F}) aufweist, der sich ausgehend von dem Fußkreisdurchmesser des ersten Verzahnungsabschnittes (22a) hin zu einer Stirnfläche (21b) des Abtriebsrades (21) bis im Wesentlichen auf einen Wert des Kopfkreisdurchmessers (d_{K}) des ersten Verzahnungsabschnittes (22a) erhöht.

3. Gurtstrafferantrieb nach Anspruch 1 oder 2,
**dadurch gekennzeichnet, dass** der zweite Verzahnungsabschnitt (22b) als Globoid-Verzahnung ausgebildet ist.

4. Gurtstrafferantrieb nach einem der vorhergehenden Ansprüche,
**dadurch gekennzeichnet, dass** der zweite Verzahnungsabschnitt (22b) als Globoid-Verzahnung mit einem von dem Fußkreisdurchmesser (d_{F}) und dem Kopfkreisdurchmesser (d_{K}) des ersten Verzahnungsabschnittes (22a) ausgehenden bis auf einen vorgegebenen Wert (D) ansteigenden Fußkreisdurchmesser (d_{F}) und Kopfkreisdurchmesser (d_{K}) ausgebildet ist.

5. Gurtstrafferantrieb nach einem der vorhergehenden Ansprüche,
**dadurch gekennzeichnet, dass** die Spindelwelle (4) auf einem federelastischen Auflager (6, 7) mit definierter Federsteifigkeit gelagert ist, derart, dass bei einem Betrieb des Schneckengetriebes (20) in Vorwärtsrichtung die Schnecke (24) in Wirkverbindung mit dem ersten Verzahnungsabschnitt (22a) des Abtriebsrades (21) steht und bei einem Betrieb des Schneckengetriebes (20) in Rückwärtsrichtung unter einer passiven Haltelast die Schnecke (24) in Wirkverbindung mit dem zweiten Verzahnungsabschnitt (22b) des Abtriebsrades (21) kommt.

6. Gurtstrafferantrieb nach Anspruch 5,
**dadurch gekennzeichnet, dass** das Auflager (6) auf einem federelastischen Bauelement (7), vorzugsweise einem Federelement gelagert ist.

7. Gurtstrafferantrieb nach einem der vorhergehenden Ansprüche,
**dadurch gekennzeichnet, dass** ein Getriebe (10) vorgesehen ist, über welches die Spindelwelle (4) von dem Elektromotor (3) angetrieben wird.

## Claims

1. A belt pre-tensioner drive for pre-tensioning a seat belt (2) capable of being wound up around a winding shaft (1), comprising
- an electric motor (3), a spindle shaft (4) and an output wheel (21) coupled to the winding shaft (1), and
- a worm gear (20) by way of which the output wheel (21) is driven by the spindle shaft (4), wherein, in order to form the worm gear (20), a helically cut external set of teeth (22) of the output wheel (21) meshes with a worm (24) mounted on the spindle shaft (4) in a rotationally fixed manner,
**characterized in that** the external set of teeth of the output wheel has at least two toothing portions (22a, 22b), wherein a first toothing portion (22a) has a set of teeth with a constant geometry and an adjoining second toothing portion (22b) is formed with an increasing tooth root diameter (d_{F}) and/or an increasing tip circle diameter (d_{K}) and/or an increasing tooth thickness (s).

2. A belt pre-tensioner drive according to claim 1, **characterized in that** following the first toothing portion (22a) the second toothing portion (22b) has a course of the tooth root diameter (d_{F}) which, starting from the tooth root diameter of the first toothing portion (22a), increases to an end face (21b) of the output wheel (21) as far as substantially a value of the tip circle diameter (d_{K}) of the first toothing portion (22a).

3. A belt pre-tensioner drive according to claim 1 or 2, **characterized in that** the second toothing portion (22b) is designed in the form of a globoid set of teeth.

4. A belt pre-tensioner drive according to any one of the preceding claims, **characterized in that** the second toothing portion (22b) is designed in the form of a globoid set of teeth with a tooth root diameter (d_{F}) and tip circle diameter (d_{K}) starting from the tooth root diameter (d_{F}) and the tip circle diameter (d_{K}) of the first toothing portion (22a) and rising to a pre-set value (D).

5. A belt pre-tensioner drive according to any one of the preceding claims, **characterized in that** the spindle shaft (4) is mounted on a spring-resilient support (6, 7) with a defined spring rigidity in such a way that when the worm gear (20) is operated in the forward direction the worm (24) is operatively connected to the first toothing portion (22a) of the output wheel (21) and when the worm gear (20) is operated in the rear direction with a passive retaining load the worm (24) is operatively connected to the second toothing portion (22b) of the output wheel (21).

6. A belt pre-tensioner drive according to claim 5, **characterized in that** the support (6) is mounted on a spring-resilient component (7), preferably a spring element.

7. A belt pre-tensioner drive according to any one of the preceding claims, **characterized in that** a gear mechanism (10) is provided, by way of which the spindle shaft (4) is driven by the electric motor (3).

## Revendications

1. Système d'entraînement tendeur de ceinture pour permettre de tendre une ceinture de sécurité (2) pouvant être enroulée autour d'un arbre d'enroulement (1) comprenant :
- un moteur électrique (3), un arbre de broche (4) et une roue entraînée (21) accouplée à l'arbre d'enroulement (1), et
- un engrenage à vis sans fin (20) par l'intermédiaire duquel la roue entraînée (21) est entraînée par l'arbre de broche (4), pour former l'engrenage à vis sans fin (20), une denture externe à denture hélicoïdale (22) de la roue entraînée (21) engrenant avec une vis hélicoïdale (24) montée solidairement en rotation sur l'arbre de broche (4),
**caractérisé en ce que**
la denture externe de la roue entraînée comprend au moins deux segments de denture (22a, 22b), un premier segment de denture (22a) ayant une denture à géométrie constante, et un second segment de denture (22b) se raccordant à ce segment ayant un diamètre de pied (d_{F}) croissant et/ou un diamètre de tête (d_{K}) croissant et/ou une épaisseur de dent (s) croissante.

2. Système d'entraînement tendeur de ceinture conforme à la revendication 1,
**caractérisé en ce que**
le second segment de denture (22b) comporte, en connexion avec le premier segment de denture (22a) un diamètre de pied (d_{F}) qui augmente, du diamètre de pied du premier segment de denture (22a) à la surface frontale (21b) de la roue entraînée (21) jusqu'à essentiellement la valeur du diamètre de tête (d_{K}) du premier segment de denture (22a).

3. Système d'entraînement tendeur de ceinture conforme à la revendication 1 ou 2,
**caractérisé en ce que**
le second segment de denture (22b) est réalisé sous la forme d'une denture globique.

4. Système d'entraînement tendeur de ceinture conforme à l'une des revendications précédentes,
**caractérisé en ce que**
le second segment de denture (22b) est réalisé sous la forme d'une denture globique avec un diamètre de pied (d_{F}) et un diamètre de tête (dₖ) croissant à partir du diamètre de pied (d_{F}) et du diamètre de pied (dₖ) du premier segment de denture (22a) jusqu'à une valeur prédéfinie (D).

5. Système d'entraînement tendeur de ceinture conforme à l'une des revendications précédentes,
**caractérisé en ce que**
l'arbre de broche (4) est monté sur un support à élasticité de ressort (6, 7) ayant une raideur définie de sorte que, lors d'un fonctionnement de l'engrenage à vis sans fin (20) vers avant la vis sans fin (24) soit en liaison active avec le premier segment de denture (22a) de la roue entraînée (21), et que lors d'un fonctionnement de l'engrenage à vis sans fin (20) vers l'arrière sous une charge de retenue passive, la vis sans fin (24) vienne en liaison active avec le second segment de denture (22b) de la roue entraînée (21).

6. Système d'entraînement tendeur de ceinture conforme à la revendication 5,
**caractérisé en ce que**
le support (6) est monté sur un élément ayant l'élasticité d'un ressort (7), et de préférence un élément à ressort.

7. Système d'entraînement tendeur de ceinture conforme à l'une des revendications précédentes,
**caractérisé en ce qu'**
il est prévu un engrenage (10) par l'intermédiaire duquel l'arbre de broche (4) est entraîné par le moteur électrique (3).
